# EUROPÄISCHE PATENTANMELDUNG

(11) **EP 3 467 377 A1**
(43) Veröffentlichungstag der Anmeldung: **10.04.2019**
(21) Anmeldenummer: 17194797.1
(22) Anmeldetag: 04.10.2017
(51) Int. Cl.: F22D 1/50, B01D 5/00, C02F 1/20, B01D 19/00, F24S 40/48

(54) **ABHITZEANLAGE FÜR HEISSWASSERERZEUGUNG UND VERFAHREN ZUM BETREIBEN EINER ABHITZEANLAGE FÜR HEISSWASSERERZEUGUNG**

(71) Anmelder: Primetals Technologies Austria GmbH, 4031 Linz (AT)
(72) Erfinder: Haselgruebler, Manfred, 4048 Puchenau (AT); Trunner, Paul, 4060 Leonding (AT); Steinparzer, Thomas, 4040 Linz (AT)
(74) Vertreter: Metals@Linz

(57) **Zusammenfassung**

Die Erfindung betrifft eine Abhitzeanlage zur Heißwasssererzeugung (1) und ein Verfahren zum Betreiben einer solchen Abhitzeanlage (1). Die Aufgabe der vorliegenden Erfindung ist es eine Abhitzeanlage und ein Verfahren für die Heißwassererzeugung zu schaffen, welche einen Ausgleich von verloren gegangenem Kreislaufwasser ermöglicht, keinen separaten Entgaser benötigt und keine Wärme aus dem Vorlauf, für eine Entgasung von Wasser, abgezogen wird. Die Aufgabe wird dadurch gelöst, dass in einer Rücklaufleitung (3) Kreislaufwasser mit einer Rücklauftemperatur von über 105°C gefördert wird und dieses teilweise in eine Ausgleichs-Entgasungsvorrichtung (4), mit einem Entgasungsdruck welcher über Atmosphärendruck liegt, eingebracht wird. Eine Druckhaltepumpe (10), welche zwischen Ausgleichs-Entgasungsvorrichtung (4) und der Rücklaufleitung (3) angeordnet ist, fördert ständig Kreislaufwasser in die Rücklaufleitung (3). Ein Druckhalteventil (9), welches zwischen Ausgleichs-Entgasungsvorrichtung (4) und der Rücklaufleitung (3) angeordnet ist, ermöglicht einen ständigen Rückfluss von Kreislaufwasser von der Rücklaufleitung (3) in die Ausgleichs-Entgasungsvorrichtung (4) .

## Beschreibung

### Gebiet der Technik

Die vorliegende Erfindung betrifft das Gebiet der Wärmerückgewinnung aus Abwärme von großen wärmeerzeugenden Industrieanlagen. Besonders in der Stahl- und Eisenverarbeitenden Industrie entstehen große Wärmemengen, welche abgeführt werden müssen und möglichst einer Nachnutzung zugeführt werden sollen. Dies ermöglicht eine energieeffiziente Betriebsweise solcher Industrieanlagen.

Einerseits betrifft die Erfindung eine Abhitzeanlage für die Heißwassererzeugung umfassend eine Beheizungseinrichtung, eine Vorlaufleitung für Kreislaufwasser mit einer Vorlauftemperatur über 110°C, zumindest ein Wärmeverbraucher, eine Rücklaufleitung für Kreislaufwasser und eine Umwälzpumpe.

Andererseits betrifft die Erfindung ein Verfahren zum Betreiben einer Abhitzeanlage für die Heißwassererzeugung, mit einem geschlossenen Wasserkreislauf. Ein Rücklaufwasserstrom wird durch eine Beheizungseinrichtung auf eine Vorlauftemperatur von über 110°C, zu einem Vorlaufwasserstrom, aufgeheizt. Der geschlossene Wasserkreislauf wird mit einem Betriebsdruck betrieben, der über dem Dampfdruck der Vorlauftemperatur liegt. Aus dem Vorlaufwasserstrom wird an zumindest einem Wärmeverbraucher Wärmeenergie aus dem Vorlaufwasserstrom entzogen.

### Stand der Technik

Solche Abhitzeanlagen für die Heißwassererzeugung ist mit einem Fernwärmenetz, wie in der DE446748-A1 gezeigt, vergleichbar.

In der DE446748-A1 ist ein Zweidrucksystem gezeigt, wobei eine Vorlaufleitung einen sechs- bis zehnmal größeren Druck aufweist als eine dazugehörende Rücklaufleitung. Die Vorlaufleitung wird mit einer Betriebstemperatur von 160°C und einem Betriebsdruck von 12 bar betrieben. Die Rücklaufleitung weist eine Temperatur von 50°C bis 60°C auf. Es sind, wie in der DE446748-A1 beschrieben, auch Fernwärmenetze, bei denen Vorlauf und Rücklauf den gleichen Druckbereich aufweisen, bekannt.

Es ist bekannt, dass solche Fernwärmenetze ein Ausgleichsgefäß zur Kompensation von Volumenänderungen von Kreislaufwasser aufweisen.
Um die Lebensdauer von Rohrleitungen, Kesselanlagen, Pumpen und Armaturen in thermischen Heißwasser Anlagen zu erhöhen, ist eine entsprechende Qualität von Kreislaufwasser notwendig. Besonders im Kreislaufwasser gebundene Gase, wie zum Beispiel Sauerstoff und Kohlendioxid, führen zu Korrosionserscheinungen und müssen aus dem Kreislaufwasser entfernt werden. Dies geschieht durch eine Entgasung von zugeführtem Frischwasser.
Eine Entgasung von Frischwasser wird durch einen eigens dafür vorgesehen Entgaser durchgeführt. Ein solcher Entgaser kann entweder durch externe Beheizung oder durch Aufbringen von Vakuum betrieben werden. Durch chemische Zugabe von Sauerstoffbindemittel kann Sauerstoff zusätzlich chemisch gebunden werden. Eine weitere Möglichkeit ist, wie in der DE2821397-A1 für ein Kombinierte Gas/Dampfturbinenkraftwerk vorgesehen, den Vorlauf bzw. Nutzdampf für das Aufheizen und Entgasen von Frischwasser heranzuziehen. Der Nachteil dieser Methode ist, dass energetisch hochwertiger Dampf für die Entgasung herangezogen wird.

### Zusammenfassung der Erfindung

Die Aufgabe der vorliegenden Erfindung ist es eine Abhitzeanlage und ein Verfahren für die Heißwassererzeugung zu schaffen, welche einerseits einen Ausgleich von verloren gegangenem Kreislaufwasser ermöglicht, andererseits keinen separaten Entgaser benötigt und keine Wärme aus dem Vorlauf, für eine Entgasung von Wasser, abgezogen wird.

Die Aufgabe wird durch die eingangs genannte Vorrichtung durch folgende Maßnahmen gelöst.
Eine Rücklaufleitung in welcher sich Kreislaufwasser, mit einer Rücklauftemperatur von über 105°C, befindet. Des Weiteren ist eine Ausgleichs-Entgasungsvorrichtung, welche in einen Gassammelraum und einen Wassersammelraum für Kreislaufwasser unterteilt ist, vorgesehen. Die Ausgleichs-Entgasungsvorrichtung weist im Innenraum einen Entgasungsdruck auf, welcher über dem Atmosphärendruck liegt. Eine Druckhaltepumpe sorgt dafür, dass zwischen Ausgleichs-Entgasungsvorrichtung und der Rücklaufleitung Kreislaufwasser ständig gefördert wird. Ein Druckhalteventil ist zwischen Ausgleichs-Entgasungsvorrichtung und der Rücklaufleitung angeordnet, um einen ständigen Rückfluss von Kreislaufwasser von der Rücklaufleitung in Richtung der Ausgleichs-Entgasungsvorrichtung zu gewährleisten.
Für den Fall, dass Kreislaufwasser verloren geht, ist ein Einlass in der Ausgleichs-Entgasungsvorrichtung vorgesehen, um Wasser - vorzugsweise nicht entgastes Wasser - zu speisen. Die Ausgleichs-Entgasungsvorrichtung weist eine Öffnungsvorrichtung auf, welche im Gassammelraum angeordnet ist, um Gase - welche durch eine Entgasung von dem nicht entgasten Wasser oder dem Kreislaufwasser entstehen - abzuführen. Die Öffnungsvorrichtung kann im einfachsten Fall als Bohrung ausgeführt sein, durch welche ein Mindestmenge eines Gas-Dampf Gemisches entweicht. Die Öffnungsvorrichtung kann aber auch als Druckregelventil oder eine Blende ausgeführt sein.

Die Rücklaufleitung fördert das Kreislaufwasser vom Wärmeverbraucher - nach vorzugsweise erfolgter Wärmeentnahme - wieder zurück zur Aufheizvorrichtung. Als Kreislaufwasser wird nicht nur das Wasser in der Vorlaufleitung und Rücklaufleitung bezeichnet, sondern auch jenes in der Ausgleichs-Entgasungsvorrichtung , da dies ständig von der Ausgleichs-Entgasungsvorrichtung in die Rücklaufleitung gefördert wird.
Um temperaturbedingte Volumenänderungen ausgleichen zu können, muss zusätzliches Wasser in den Kreislauf eingebracht werden, dies geschieht durch Zufuhr von Kreislaufwasser aus der Ausgleichs-Entgasungsvorrichtung. Des Weiteren können immer wieder Verluste von Kreislaufwasser auftreten. Solche Verluste treten durch undichte Verbindungen von Rohrleitungen und anderen Anlagenteilen auf. Des Weiteren wird ein Teil des Kreislaufwasser in gewissen Zeiträumen abgelassen und erneuert. Das zugeführte nicht entgaste Wasser muss - um Korrosion in der Abhitzeanlage gering zu halten - entgast werden. Dies erfolgt dadurch, dass Rücklaufwasser mit einer Temperatur von über 105°C, ständig durch ein Druckhalteventil, in die Ausgleichs-Entgasungsvorrichtung gleitet wird. Gleichzeitig fördert die Druckhaltepumpe Kreislaufwasser von der Ausgleichs-Entgasungsvorrichtung in die Rücklaufleitung.
Durch einen ständigen Mindestfluss wird eine Beheizung in der Ausgleichs-Entgasungsvorrichtung erzielt, wodurch das ständige Entgasen des nicht entgasten Wassers erreicht wird. Die Ausgleichs-Entgasungsvorrichtung weist einen Entgasungsdruck auf, der über dem in der Umgebung herrschenden Atmosphärendruck liegt. Der Entgasungsdruck liegt etwas unter dem Dampfdruck des Kreislaufwassers in der Rücklaufleitung. Ein weiterer Vorteil der sich durch diese Abhitzeanlage ergibt ist, dass durch den ständigen Rückfluss aus der Rücklaufleitung, über das Druckhalteventil, auch das Kreislaufwasser ständig entgast wird. Das Kreislaufwasser kann ebenfalls noch gebundene Gase aufweisen. Dies ist besonders bei einem Neustart der Abhitzeanlage von Bedeutung, wenn das gesamte Kreislaufwasser erneuert wird, da in diesem Fall noch keine Entgasung, des neu zugeführten Kreislaufwassers, stattgefunden hat. Das Kreislaufwasser aus der Rücklaufleitung hat eine niedrigere Temperatur als jenes in der Vorlaufleitung. Dies ermöglicht es auch, dass die Ausgleichs-Entgasungsvorrichtung für einen niedrigeren Druck ausgelegt werden kann. Der Dampfdruck des Kreislaufwasser in der Rücklaufleitung ist niedriger, als jener in der Vorlaufleitung. Des Weitern ist das Kreislaufwasser in der Vorlaufleitung energetisch höherwertig und lässt sich auch leichter an den Wärmeverbraucher abgeben. Das Kreislaufwasser in der Rücklaufleitung, das eine Temperatur über 105°C aufweist, führt zu einer einfachen, effektiven und permanenten Entgasung von nicht entgastem Wasser und dem Kreislaufwasser.

In einer vorteilhaften Ausführung wird ein Zwischenspeicher, zwischen der Vorlaufleitung und der Rücklaufleitung, angeordnet. Eine zusätzliche Umwälzpumpe, welche in der Vorlaufleitung nach dem Zwischenspeicher und vor dem zumindest einen Wärmeverbraucher angeordnet ist, sorgt dafür, dass die benötigte Wärmemenge an den Verbraucher geliefert wird. Dies ermöglicht einen kontinuierlicheren Betrieb des Wärmeverbrauchers in Phasen in denen weniger Energie, von der Beheizungseinrichtung, geliefert wird. Dies ist beispielsweise bei einem Elektrolichtbogenofen oder einem Stahlwerkskonverter der Fall, wenn während einer Chargierphase wenig oder keine Energie abgeben wird. Es kann aber auch dann vorteilhaft sein, wenn der Wärmeverbraucher unterschiedliche Mengen von Wärme benötigt. Dies ist der Fall wenn der Wärmeverbraucher Phasen mit größerem Wärmebedarf und Phasen mit kleinem oder keinem Wärmebedarf aufweist.

In einer weiteren vorteilhaften Ausführung wird nach dem Druckhalteventil, zum Einbringen von Kreislaufwasser in die Ausgleichs-Entgasungsvorrichtung, ein Düsenkopf angeordnet. Der Düsenkopf weist mehrere Bohrungen auf, durch welche das Wasser fein verteilt in die Ausgleichs-Entgasungsvorrichtung eingebracht wird. Der Düsenkopf verhindert Dampfschläge. Solche Dampfschläge treten auf, wenn Wasser und Dampf unterschiedlicher Temperatur aufeinander treffen. Deshalb soll durch einen Düsenkopf eine feine Verteilung erzielt werden. Dies hat auch zur Folge, dass die Entgasung vom eingebrachten nicht entgasten Wasser positiv beeinflusst wird.

Vorteilhafterweise ist in der Rücklaufleitung ein Notkühler angeordnet. Dieser Notkühler sorgt dafür, falls kein Wärmeverbraucher Wärme benötigt und eine möglicher Zwischenspeicher keine zusätzliche Wärme aufnehmen kann, dass die Rücklaufleitung eine nicht zu hohe Temperatur erreicht. Die in die Vorlaufleitung eingebrachte Wärme muss abgeführt werden. Dieser Notkühler dient als Sicherheit, damit die Anlagenteile keinen überhöhten Temperaturen ausgesetzt werden.

Die Beheizungseinrichtung ist vorteilhafterweise eine Abwärmerückgewinnungsanlage von einem Elektrolichtbogenofen oder Stahlwerkskonverter. Bei solchen Anlagen kommt es zu ständig wechselnden Bedingungen, weil aufgrund der unterschiedlichen Betriebszuständen - Chargieren von Schrott, Einschmelzvorgang, Abstechen der Stahlschmelze - die Wärmemengen stark variieren. Deshalb kommt es zu temperaturbedingten Volumenänderungen in der Vorlaufleitung und der Rücklaufleitung, welche durch Kreislaufwasser in der Ausgleichs-Entgasungsvorrichtung ausgeglichen werden.

In einer weiteren zweckmäßigen Ausprägung, weist die Öffnungsvorrichtung der Ausgleichs-Entgasungsvorrichtung einen Kondensator auf, welcher entweichenden Dampf zu Wasser kondensiert und dieses in die Ausgleichs-Entgasungsvorrichtung rückführt. Der Dampf des durch die Öffnungsvorrichtung entweichende Gas-Dampf Gemisches kann durch einen Kondensator als Wasser zurückgewonnen werden. Dieses Wasser kann in die Ausgleichs-Entgasungsvorrichtung rückgeführt werden. Dies ist besonders dann vorteilhaft, wenn größere Mengen an Dampf entweichen.

Die Aufgabe wird auch durch das eingangs genannte Verfahren gelöst, welches folgende Schritte umfasst:
Der Rücklaufwasserstrom weist, nach zumindest einem Wärmeverbraucher, eine Rücklauftemperatur von über 105°C auf. Aus der Ausgleichs-Entgasungsvorrichtung wird eine Teilmenge von Wasser dem Rücklaufwasserstrom zugeführt, um den Betriebsdruck im Wasserkreislauf aufrechtzuerhalten. Eine Teilmenge des Rücklaufwasserstroms wird anschließend durch ein Druckhalteventil, der Ausgleichs-Entgasungsvorrichtung zugeführt, wobei die Ausgleichs-Entgasungsvorrichtung einen Druckbereich über Atmosphärendruck und unter einem Betriebsdruck aufweist, welcher üblicherweise dem Sättigungsdruck, des in der Ausgleichs- Entgasungsvorrichtung vorliegenden Kreislaufwassers, entspricht. Der Betriebsdruck des Vorlaufwasserstromes und des Rücklaufwasserstromes liegt zumindest über dem Dampfdruck des Vorlaufwasserstromes. Der Ausgleichs-Entgasungsvorrichtung wird - bei einer Unterschreitung eines Soll-Füllstandes - nicht entgastes Wasser zugeführt. Der Soll-Füllstand wird derart gewählt, dass einerseits genügend Wasser - in der Ausgleichs-Entgasungsvorrichtung - vorhanden ist um den Betriebsdruck aufrechtzuerhalten und verloren gegangenes Wasser nachzufüllen. Andererseits soll bei hohen Temperaturen durch Volumenausdehnung entstehendes überschüssiges Wasser aus dem Wasserkreislauf aufgenommen werden. Gase, welche im nicht entgasten Wasser oder im Wasserkreislauf vorhanden sind, werden über eine Öffnungsvorrichtung der Ausgleichs-Entgasungsvorrichtung abgelassen. Solche Gase sind unter anderem Sauerstoff und Kohlendioxid.

Durch den Betrieb einer Abhitzeanlage für Heißwassererzeugung mit dem beschriebenen Verfahren ergeben sich dieselben Vorteile wie bei der Vorrichtung bereits erläutert. Dieses Verfahren stellt sicher, dass ständig eine Teilmenge von Wasser aus der Ausgleichs-Entgasungsvorrichtung in den Rücklaufwasserstrom gefördert wird. Ebenso wird ständig eine Teilmenge aus dem Rücklaufwasserstrom in die Ausgleichs-Entgasungsvorrichtung gefördert. Da der Rücklaufwasserstrom eine Rücklauftemperatur von über 105°C aufweist, wird eine Entgasung in der Ausgleichs-Entgasungsvorrichtung erzielt. Die Größe der Teilmenge aus dem Rücklaufwasserstrom, welche in die Ausgleichs-Entgasungsvorrichtung gefördert wird, ist abhängig von der Gesamtwassermenge im System und der Mindestdurchflussmenge der Druckhaltepumpen.

Ein vorteilhafte Ausführungsform sieht vor, dass Wärmeenergie des Vorlaufwasserstroms, bei Überschreiten einer Vorlaufsolltemperatur und gleichzeitigem Wärmeüberangebot von der Beheizungseinrichtung, in einem Zwischenspeicher gespeichert wird und bei unterschreiten einer Vorlaufsolltemperatur oder bei Wärmeunterangebot aus der Beheizungseinrichtung dem Vorlaufwasserstrom zugeführt werden kann. Besonders bei nicht konstant gelieferter Wärmemenge und wenn Wärmeverbraucher Phasen mit unterschiedlichem Wärmeverbrauch aufweisen, ist ein solcher Zwischenspeicher von Vorteil.

In vorteilhafter Weise wird die Teilmenge des Rücklaufwasserstroms nach dem Druckregelventil über einen Düsenkopf fein verteilt in die Ausgleichs-Entgasungsvorrichtung eingebracht. Die feine Verteilung bewirkt eine Vermeidung von Dampfschlägen, welche auftreten können wenn ein Wasser/Dampfstrahl mit hoher Temperatur in eine Wassermenge mit niedrigerer Temperatur eingebracht wird. Das Druckregelventil und der Düsenkopf werden vorzugsweise so kombiniert, dass der erzielte Druckabfall eine zusätzliche Entgasung, von nicht entgasten Wasser und/oder im Wasserkreislauf gebundener Gase, bewirkt.

Eine weitere mögliche Ausführungsform sieht vor, das im Rücklaufwasserstrom ein Notkühler angeordnet ist, zur Erniedrigung der Rücklauftemperatur, wenn diese eine maximale Rücklauftemperatur überschreitet. Diese Ausführung ermöglicht bei einer Störung, wenn der Wärmeverbraucher keine Wärme benötigen oder der Wärmespeicher bereits voll ist, dass die Wärme abgeführt werden kann, um einen sicheren Betrieb der Abhitzeanlage zu ermöglichen.

Eine vorteilhafte Ausführung des Verfahrens ist, dass die Beheizungseinrichtung mit Abwärme aus einer Abwärmerückgewinnungsanlage von einem Elektrolichtbogenofen oder Stahlwerkskonverter betrieben wird. Durch die ständig wechselnden Bedingungen, bei einem Elektrolichtbogenofen und einem Stahlwerkskonverter, ist das beschriebene Verfahren mit einer Ausgleichs-Entgasungsvorrichtung besonders gut geeignet, um die temperaturbedingten Volumenänderungen ausgleichen zu können.

Eine vorteilhafte Ausprägung des Verfahrens sieht vor, dass über die Öffnungsvorrichtung der Ausgleichs-Entgasungsvorrichtung entweichender Dampf durch einen Kondensator kondensiert wird und in die Ausgleichs-Entgasungsvorrichtung rückgeführt wird. Die Rückführung, des durch kondensieren des Dampfes gewonnen Wassers, hat den Vorteil, dass dadurch weniger nicht entgastes Wasser in die Ausgleichs-Entgasungsvorrichtung zugeführt werden muss.

Kurze Beschreibung der Zeichnungen
Weitere Vorteile und Merkmale der vorliegenden Erfindung ergeben sich aus der nachfolgenden Beschreibung nicht einschränkender Ausführungsbeispiele, wobei auf die folgenden Figuren Bezug genommen wird, die folgendes zeigen:
Fig. 1 eine schematische Darstellung einer erfinderischen Abhitzeanlage für Heißwassererzeugung
Fig. 2 eine schematische Darstellung einer vorteilhaften erfinderischen Abhitzeanlage für Heißwassererzeugung
Fig. 3 eine schematische Darstellung einer weiteren vorteilhaften erfinderischen Abhitzeanlage für Heißwassererzeugung

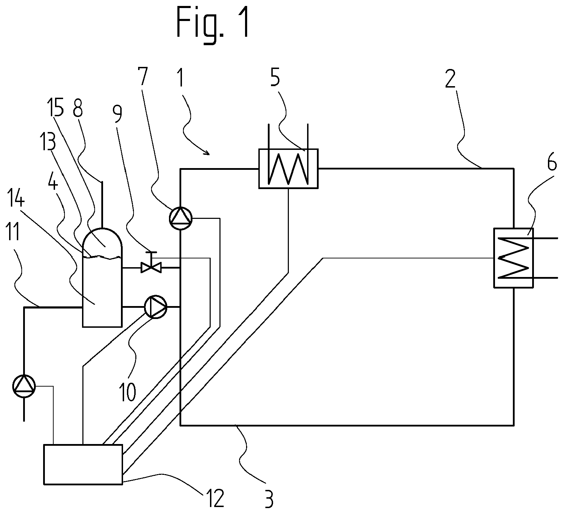

Beschreibung der Ausführungsformen
Fig. 1 zeigt eine erfindungsgemäße Abhitzeanlage für Heißwassererzeugung 1. Durch eine Beheizungseinrichtung 5 wird Wärme, von einem externen Erzeuger, auf einen in der in der Vorlaufleitung 2 geförderter Vorlaufwasserstrom übertragen. Der Vorlaufwasserstrom weist eine Temperatur von über 110°C auf und der Druck in der Vorlaufleitung liegt über dem Dampfdruck des Vorlaufwasserstroms. Ein Wärmeverbraucher 6 entzieht diese Wärme wieder aus dem geförderten Vorlaufwasserstrom der Vorlaufleitung 2. Solche Wärmeverbraucher 6 sind beispielsweise Dampferzeuger, Fernwärmeanlagen oder Trocknungsanlagen. Anschließend wird ein Rücklaufwasserstrom, welcher nach dem Entzug der Wärme entsteht, gebildet. Dieser Rücklaufwasserstrom weist eine Temperatur von über 105°C auf und wird in der Rücklaufleitung 3 mithilfe einer Umwälzpumpe 7 in Richtung Beheizungseinrichtung 5 gefördert. Bevor die Beheizungseinrichtung 5 wieder erreicht wird, ist in der Rücklaufleitung 3 eine Abzweigung vorgesehen, welche eine Druckhaltepumpe 10 aufweist und in eine Ausgleichs-Entgasungsvorrichtung 4 mündet. In Bezug auf diese Erfindung wird das Wasser in der Ausgleichs-Entgasungsvorrichtung 4 sowie das Wasser in der Vorlaufleitung 2 und Rücklaufleitung 3 als Kreislaufwasser bezeichnet. Die Druckhaltepumpe 10 sorgt dafür, dass einerseits ein Betriebsdruck in der Abhitzeanlage für Heißwassererzeugung 1 aufrechterhalten wird und andererseits ein ständiger Zulauf von Kreislaufwasser, welches sich in der Ausgleichs-Entgasungsvorrichtung 4 befindet, in die Rücklaufleitung 3 erfolgt. Der Betriebsdruck liegt zumindest über dem Dampfdruck des Vorlaufwasserstroms. In der Ausgleichs-Entgasungsvorrichtung 4 herrscht üblicherweise Sättigungsdampfdruck des Anteils vom Kreislaufwasser, welches sich in der Ausgleichs-Entgasungsvorrichtung befindet. Solche Abhitzeanlagen für Heißwassererzeugung 1 werden typischer Weise in einem Vorlauftemperaturbereich von 130°C bis 230°C und einem Betriebsdruck von bis zu 45 bar betrieben, wobei sich der minimale Druck durch den Dampfdruck des Vorlauftemperaturbereiches ergibt. Der Rücklauftemperaturbereich liegt, abhängig von der Vorlauftemperatur, im Bereich von 105°C bis 200°C. Diese Temperatur- und Druckbereiche können in bestimmten Betriebszuständen - wie zum Beispiel bei der Inbetriebnahme oder dem Abstellen der Abhitzeanlage für Heißwassererzeugung 1 - abweichen. Durch ein Druckhalteventil 9 wird ständig eine Teilmenge aus dem Rücklaufwasserstrom der Rücklaufleitung 3 in die Ausgleichs-Entgasungsvorrichtung 4 eingelassen. Typischerweise beträgt die Teilmenge aus dem Rücklaufwasserstrom welche der Ausgleichs-Entgasungsvorrichtung zugeführt wird mindestens 1 m³/h. Ein Einlass 11 - für nicht entgastes Wasser -ermöglicht, dass neues Wasser der Abhitzeanlage für Heißwassererzeugung 1 zugeführt wird. Dieses nicht entgaste Wasser enthält gebundene Gase wie zum Beispiel Sauerstoff oder Kohlenstoffdioxid. Diese Gase führen zu Korrosionsvorgängen in der Abhitzeanlage für Heißwassererzeugung 1. Diese gebundenen Gase sollen möglichst aus dem Wasser getrennt werden. Die Ausgleichs-Entgasungsvorrichtung 4 weist einen Wassersammelraum 14 und einen Gassammelraum 15 auf. Ein Füllstand 13 des Kreislaufwassers in der Ausgleichs-Entgasungsvorrichtung 4 verändert sich, je nachdem in welchem Betriebszustand sich die Abhitzeanlage für Heißwassererzeugung 1 gerade befindet. Die Betriebszustände ändern sich besonders bei nicht kontinuierlich arbeitenden Anlagen - beispielsweise in der Stahl- und Metallerzeugenden Industrie.
Eine Steuereinrichtung und/oder Regeleinrichung 12 erfasst sämtliche Messdaten aus den unterschiedlichen Anlagenteilen und steuert und/oder regelt die Anlage nach dem beschriebenen Verfahren.
Durch eine Öffnungsvorrichtung 8 wird ein Gas/Dampfgemisch, welches sich durch einen Entgasungsvorgang ergibt, abgelassen.

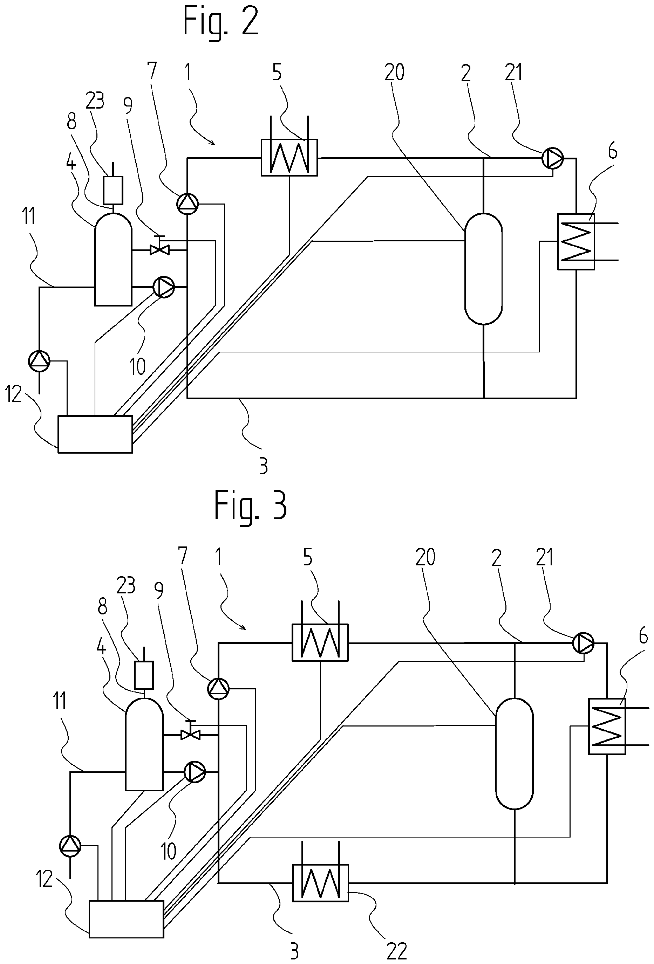

In Fig. 2 sind zusätzlich zu den bereits in Fig. 1 behandelten Anlagenteile noch ein Zwischenspeicher 20 mit einer zusätzlichen Umwälzpumpe 21 angeordnet. Der Zwischenspeicher 20 erlaubt es überschüssige Wärme vorübergehend zu speichern und bei Bedarf dann an den Wärmeverbraucher 6 abzugeben. Dies ist besonders dann vorteilhaft, wenn der Wärmeverbraucher 6 nicht genügend Wärme abnehmen kann und bei Überschreiten von bestimmten Temperaturbereichen ein Problem für die Betriebssicherheit - der Abhitzeanlage für Heißwassererzeugung 1 - auftreten könnte. Ein weitere dargestellte vorteilhafte Ausführung ist der Kondensator 23. Dieser kondensiert entweichenden Dampf zu Wasser und führt dieses in die Ausgleichs-Entgasungsvorrichtung 4 zurück.

In Fig. 3 ist, zusätzlich zu den in Fig. 2 gezeigten Anlagenteilen, ein Notkühler 22, welcher in der Rücklaufleitung 3 angeordnet ist, gezeigt. Ein solcher Notkühler kann überschüssige Wärme abführen, falls die Wärmeverbraucher 6 keine Wärme abnehmen oder ein Problem in der Abhitzeanlage für Heißwassererzeugung auftritt. Dadurch wird gewährleistet, dass in der Rücklaufleitung 3 die zulässigen Temperaturen niemals überschritten werden.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 1: Abhitzeanlage für Heißwassererzeugung
- 2: Vorlaufleitung
- 3: Rücklaufleitung
- 4: Ausgleichs-Entgasungsvorrichtung
- 5: Beheizungseinrichtung
- 6: Wärmeverbraucher
- 7: Umwälzpumpe
- 8: Öffnungsvorrichtung
- 9: Druckhalteventil
- 10: Druckhaltepumpe
- 11: Einlass für nicht entgastes Wasser
- 12: Steuer- und/oder Regeleinrichtung
- 13: Füllstand
- 14: Wassersammelraum
- 15: Gassammelraum
- 20: Zwischenspeicher
- 21: zusätzliche Umwälzpumpe
- 22: Notkühler
- 23: Kondensator

## Patentansprüche

1. Abhitzeanlage zur Heißwasssererzeugung (1) umfassend eine Beheizungseinrichtung (5), eine Vorlaufleitung (2) für Kreislaufwasser mit einer Vorlauftemperatur über 110°C, zumindest ein Wärmeverbraucher (6), eine Rücklaufleitung (3) für Kreislaufwasser und eine Umwälzpumpe (7), **gekennzeichnet durch**,
- die Rücklaufleitung (3) zur Förderung von Kreislaufwasser mit einer Rücklauftemperatur von über 105°C,
- eine Ausgleichs-Entgasungsvorrichtung (4) mit einem Entgasungsdruck, welcher über Atmosphärendruck liegt, mit einem Gassammelraum (15) und einem Wassersammelraum (14) für Kreislaufwasser,
- eine Druckhaltepumpe (10), welche zwischen Ausgleichs-Entgasungsvorrichtung (4) und der Rücklaufleitung (3) angeordnet ist und ständig Kreislaufwasser in die Rücklaufleitung (3) fördert,
- ein Druckhalteventil (9), welches zwischen Ausgleichs-Entgasungsvorrichtung (4) und der Rücklaufleitung (3) angeordnet ist und einen ständigen Rückfluss von Kreislaufwasser von der Rücklaufleitung (3) in die Ausgleichs-Entgasungsvorrichtung (4) ermöglicht,
- die Ausgleichs-Entgasungseinrichtung (4) einen Einlass für nicht entgastes Wasser (11) aufweist,
- die Ausgleichs-Entgasungsvorrichtung (4) eine Öffnungsvorrichtung (8) aufweist, welche im Gassammelraum (15) angeordnet ist, um Gase, welche durch eine Entgasung von dem nicht entgasten Wasser oder Kreislaufwasser entstehen, abzuführen.

2. Vorrichtung nach Anspruch 1, **dadurch gekennzeichnet, dass** ein Zwischenspeicher (20) zwischen der Vorlaufleitung (2) und der Rücklaufleitung (3) angeordnet ist und eine zusätzliche Umwälzpumpe (21) welche in der Vorlaufleitung (2) nach dem Zwischenspeicher (20) und vor dem zumindest einen Wärmeverbraucher (6) angeordnet ist.

3. Vorrichtung nach einem der vorhergehenden Ansprüche, **dadurch gekennzeichnet, dass** nach dem Druckhalteventil (9) Kreislaufwasser über einen Düsenkopf in die Ausgleichs-Entgasungsvorrichtung eingebracht wird.

4. Vorrichtung nach einem der vorhergehenden Ansprüche, **dadurch gekennzeichnet, dass** in der Rücklaufleitung (3) ein Notkühler (22) angeordnet ist.

5. Vorrichtung nach einem der vorhergehenden Ansprüche, **dadurch gekennzeichnet, dass** die Beheizungseinrichtung (5) eine Abwärmerückgewinnungsanlage von einem Elektrolichtbogenofen oder Stahlwerkskonverter ist

6. Vorrichtung nach einem der vorhergehenden Ansprüche, **dadurch gekennzeichnet, dass** die Öffnungsvorrichtung (8) der Ausgleichs-Entgasungsvorrichtung (4) einen Kondensator (23) aufweist, welcher entweichendes Dampf kondensiert und in die Ausgleichs-Entgasungsvorrichtung (4) rückführt.

7. Verfahren zum Betreiben einer Abhitzeanlage zur Heißwassererzeugung (1), wobei die Abhitzeanlage einen geschlossenen Wasserkreislauf mit einem Rücklaufwasserstrom aufweist, wobei durch eine Beheizungseinrichtung (5) der Rücklaufwasserstrom auf eine Vorlauftemperatur von über 110°C aufgeheizt wird, wodurch ein Vorlaufwasserstrom erzeugt wird, der geschlossene Wasserkreislauf wird mit einem Betriebsdruck betrieben, der über dem Dampfdruck der Vorlauftemperatur liegt, aus dem Vorlaufwasserstrom wird an zumindest einem Wärmeverbraucher (6) Wärmeenergie aus dem Vorlaufwasserstrom entzogen **dadurch gekennzeichnet, dass**
- der Rücklaufwasserstrom eine Rücklauftemperatur von über 105°C aufweist,
- aus einer Ausgleichs-Entgasungsvorrichtung (4) wird eine Teilmenge von Wasser dem Rücklaufwasserstrom zugeführt um den Betriebsdruck im geschlossenen Wasserkreislauf aufrechtzuerhalten,
- eine Teilmenge des Rücklaufwasserstroms wird über ein Druckhalteventil der Ausgleichs-Entgasungsvorrichtung (4) zugeführt, wobei die Ausgleichs-Entgasungsvorrichtung (4) einen Druckbereich über Atmosphärendruck und unter dem Betriebsdruck aufweist,
- der Ausgleichs-Entgasungsvorrichtung (4) wird bei einer Unterschreitung eines Soll-Füllstandes nicht entgastes Wasser zugeführt,
- aus der Ausgleichs-Entgasungsvorrichtung (4) werden über eine Öffnungsvorrichtung (8) Gase, welche durch eine Entgasung von nicht entgastem Wasser oder dem Rücklaufwasserstrom entstehen, abgelassen.

8. Verfahren nach Anspruch 7, **dadurch gekennzeichnet, dass** Wärmeenergie des Vorlaufwasserstroms bei Überschreiten einer Vorlaufsolltemperatur und Wärmeüberangebot aus der Beheizungseinrichtung (5) in einem Zwischenspeicher gespeichert wird und bei unterschreiten einer Vorlaufsolltemperatur oder Wärmeunterangebot aus der Beheizungseinrichtung (5) dem Vorlaufwasserstrom zugeführt werden kann.

9. Verfahren nach einem der Ansprüche 7 oder 8, **dadurch gekennzeichnet, dass** das Kreislaufwasser nach dem Druckhalteventil über einen Düsenkopf fein verteilt in die Ausgleichs-Entgasungsvorrichtung (4) eingebracht wird.

10. Verfahren nach einem der Ansprüche 7 - 9, **dadurch gekennzeichnet, dass** im Rücklaufwasserstrom ein Notkühler (22) angeordnet ist, zur Erniedrigung der Rücklauftemperatur, wenn diese eine maximale Rücklauftemperatur überschreitet

11. Verfahren nach einem der Ansprüche 7 - 10, **dadurch gekennzeichnet, dass** die Beheizungseinrichtung (5) mit Abwärme aus einer Abwärmerückgewinnungsanlage von einem Elektrolichtbogenofen oder Stahlwerkskonverter betrieben wird.

12. Verfahren nach einem der Ansprüche 7 - 11, **dadurch gekennzeichnet, dass** über die Öffnungsvorrichtung (8) der Ausgleichs-Entgasungsvorrichtung (4) entweichender Dampf durch einen Kondensator (23) kondensiert wird und ein entstehendes Kondensat in die Ausgleichs-Entgasungsvorrichtung (4) rückgeführt wird.
